(19) Europäisches Patentamt
European Patent Office
Office européen des brevets

(11) **EP 2 750 324 A1**

(12) **EUROPEAN PATENT APPLICATION**

(43) Date of publication:
**02.07.2014 Bulletin 2014/27**

(51) Int Cl.:
*H04L 9/32* (2006.01)    *G06F 21/62* (2013.01)

(21) Application number: **12306678.9**

(22) Date of filing: **27.12.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Gemalto SA
92190 Meudon (FR)**

(72) Inventor: **Rhelimi, Alain
92190 Meudon (FR)**

(74) Representative: **Afdili, Ilham
Gemalto SA
Intellectual Property Dpt
6 rue de la Verrerie
92190 Meudon (FR)**

(54) **Method for a user to prove the ownership of an anonymous document**

(57)    The invention relates to a method for a user to prove his ownership of an anonymous document generated by and sent from a secure system of a third party to a secure element of the user, the method comprising it comprises pre-computing pairs of key ($K_S$,$K_P$), comprising a secret key and a public key of the user, and storing said pairs of key in the secure element of the user, characterised in that it comprises signing the document both by the user and the third party, each pair of keys pre-computed by the secure element of the user being a one-time key.

**Fig. 1**

EP 2 750 324 A1

## Description

## FIELD OF THE INVENTION

The present invention relates generally to anonymous documents and more specifically to a method for a user to prove his ownership of a document when purchasing goods and services anonymously.

## BACKGROUND OF THE INVENTION

Currently when someone wants a document from a third party such as a a receipt from a merchant corresponding to the purchase of goodsor services, it is necessary for the payer to provide the merchant personal data such as name, address, and sometimes more personal data. Providing such personal data is necessary if the payer wants then to prove he has really purchased a good or service when using a warranty service or for example when it is required for being reimbursed all or part of the purchasing.

Providing personal data may be more and more inconvenient as more and more personal data is requested.

For anonymous documents, e.g. which do not include any personal data on the owner of the document, it can be sometimes difficult to prove the ownership of the document. It is not that easier for the owner of the document to prove the link between him and the document.

Then either a person give all required personal data on herself and all such data appears on a document, or there is no indication on the owner of the document and it is harder for the owner to prove her ownership of the document.

There is then a need for providing and guarantee the anonymity of documents while proving the ownership of such documents.

There is then a need to provide a method for proving compliancy of a user profile stored in a secure element with the profile required by a service provider while preserving the privacy of the user.

Thereto, the present invention provides a method for a user to prove his ownership of an anonymous document generated by and sent from a secure system of a third party to a secure element of the user, the method comprising it comprises pre-computing pairs of key $(K_S, K_P)$, comprising a secret key and a public key of the user, and storing said pairs of key in the secure element of the user, **characterised in that** it comprises signing the document both by the user and the third party, each pair of keys pre-computed by the secure element of the user being a one-time key.

According to another aspect of the invention, the method may comprise sending a first pseudo-certificate generated by the secure element of the user to the secure system of the third party and sending back a pseudo-certificate generated by the secure system of the third party to the secure element of the user so that the user and the third party are able to store the document and the associated pseudo-certificates.

According to another aspect of the invention, the method may comprise signing each public key $(K_P^i)$ of the user by an identity provider server (IPS).

According to another aspect of the invention, the method may comprise sending a pseudo certificate to the identity provider server (IPS) so that the third party is able to check the authenticity of the user.

According to another aspect of the invention, the identity provider server IPS may sign a batch of user public keys pre-computed by the secure element during spare time.

According to another aspect of the invention, the method may comprise uploading a batch of public keys encrypted with the public key of the identity provider (IPS).

According to another aspect of the invention, the method may comprise checking whether the public key of the user has been revoked by sending the pseudo certificate of the public key of the user $(K_P^i)$ to the identity provider (IPS).

According to another aspect of the invention, the secure element of the user may store all certificates or pseudo certificates.

According to another aspect of the invention, the method may comprise transferring the ownership of the document to another user, and storing ownership transfer data in the secure element.

According to another aspect of the invention, the method may comprise a step of erasing the transferred document from the secure element of the user, and all the certificates or pseudo-certificates associated.

Thanks to the invention, it is advantageously possible to purchases goods and services anonymously.

The anonymity of any owner of documents is guaranteed and there is no possibly of user tracking.

The invention ensures that an anonymous customer can prove the ownership of a service or a good in guaranteeing his anonymity.

The invention provides advantageously a solution which may work temporally off-line.

The invention does not require real time performance on the server especially regarding to keys generation.

The invention takes advantage of large capacity of storage of new secure elements.

The invention advantageously provides a means for anonymous ownership transfer.

The solution may advantageously prevent faked documents such as fake invoices from a merchant as even in having an anonymous customer, a financial authority may check the authenticity of an invoice.

If a merchant is in the circle of confidence of the user, and according to his choice, then the user may decide to switch the invoice from being anonymous to being not anonymous or encrypt its identity to reveal it only with trust parties.

The various aspects, features and advantages of the invention will become more fully apparent to those having ordinary skill in the art upon careful consideration of the following Detailed Description, given by way of example thereof, with the accompanying drawing described below:

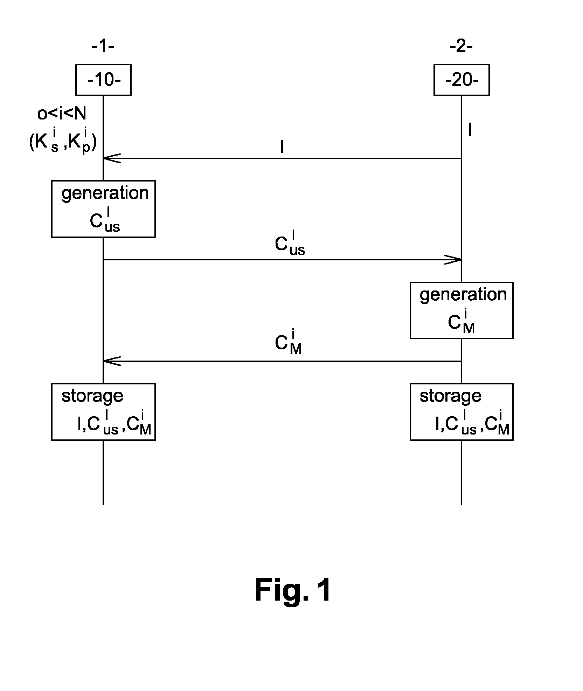

> FIGURE.1 schematically shows a flowchart diagram according to an embodiment of the invention.

## DETAILED DESCRIPTION

The present invention may be understood according to the detailed description provided herein.

As shown of figure 1, a user 1 has a secure element 10 and a third party such as a merchant 2 has a secure system 20.

According to a method of the invention, the merchant generates a document such as an invoice I and sends the invoice I to the user, and more particularly to the secure element 10 of the user 1.

The secure element 10 comprises pre-computed N pairs of key $(K_S{}^i, K_P{}^i)$ with $0<i<N$, i being an index of a couple of keys $(K_S{}^i, K_P{}^i)$ with $0<i<N$. Each pair of key $(K_S{}^i, K_P{}^i)$ comprises a secret key $K_S{}^i$ and a public key $K_P{}^i$. The user generates or gets the couple of keys by its secure element.

Each pair of keys $(K_S{}^i, K_P{}^i)$ is used once and only once and for one document only. Then each pair of keys $(K_S{}^i, K_P{}^i)$ is a one time pair of keys or a disposable pair of keys.

After the reception of the invoice, the secure element 10 of the user 1 computes a first certificate or pseudo certificate $C_{US}{}^I$.

The first pseudo certificate $C_{US}{}^I$ is based on a signed data generated from the document itself with the public key $K_S{}^i$.

For example the pseudo certificate can be generated as follow:

$$DI^i = SHA2(I)$$

$$C_{US}{}^I = signed[K_S{}^i](DI^i).$$

Then the method comprises sending the first pseudo certificate $C_{US}{}^I$ generated by the secure element 10 of the user to secure system 20 of the merchant 2.

The secure system 20 of the merchant then computes a second certificate $C_M{}^i$ at his side based on the first pseudo certificate $C_{US}{}^I$ and signed with the secret key $K_S{}^M$ of the merchant.

The second pseudo certificate $C_M{}^i$ is for example as follow:

$$C_M{}^i = signed[K_S{}^M](C_{US}{}^I).$$

At the merchant 20 side, both the first and the second pseudo certificates $(C_{US}{}^I, C_M{}^i)$ are stored with the invoice I either on the secure system 20 of the merchant or in another storage means of the merchant, which can be secure or not.

The method comprises sending the second peudo certificate to the secure element 10 of the user.

At the secure element 10 side, both the first and the second peudo certicates $(C_{US}{}^I, C_M{}^i)$ are stored with the invoice I either of the secure element 10 of the user or in another storage (means of the user, which can be secure or not.

The secure element 10 of the user 1 then will use the next index $i=i+1$ for the next anonymous document.

A new one time pair of key is then generated.

Then from one transaction to a next one, there is no constant, and then no correlation.

Each public key $K_P{}^i$ is signed by an Identity Provider Server IPS. It will be well understood that the secure element 10 of the user 1 and the secure system 20 of the merchant 2 may store additional information that could be required. The secure element 10 then may also store such signatures as additional information.

In another embodiment, the secure element 10 sends a pseudo certificate of the public key $K_P{}^i$ to the identity provider server IPS. This step advantageously allows the merchant system 20 to check the authenticity of the user 1 by means associated to the secured element 10 like a PIN code or biometric data. There is a non traceability, i.e. the authentication is possible but not the identification. This pseudo certificate prevents the merchant 2 from forge non-authentic invoices.

In another embodiment, the identity provider server IPS signs a batch of user public keys pre-computed by the secure element 10 during spare time. The secure element 10 uploads a batch of public keys encrypted with the public key of the identity provider IPS or an equivalent such as a secure and authentic channel, the identity provider server IPS notifies the secure element 10 of the user 1 when the batch is ready and encrypts the result with the public key of the secure element 10 of the user or an equivalent such as a secure and authentic channel. Then the secure element 10 downloads the result and decrypts it using its secret key. The above exchanges of data do not require a secure channel of communication.

In another embodiment, the secure system 20 of the merchant checks if the public key has been revoked in sending the pseudo certificate of the public key $K_P{}^i$ to the identity provider IPS. The secure element 10 of the user 1, e.g. of the owner of the invoice comprises all certificates or pseudo certificates which allow to retrieve the path from the invoice to the merchant for one hand, and for all ownership transfer between users if any.

According to another embodiment, the method comprises transferring the ownership of the document from the user 1, e.g. the initial owner, to another user, and storing ownership transfer data in the secure element. Same steps are used for doing the transfer but in replacing the secure system 20 of the merchant by a secure element of a user who wants to transfer his invoice or another document.

After the transfer of ownership from the secure element 10 of the user 1 to another user, the method comprises a step of erasing the transferred document from the secure element 10, and all the certificates or pseudo-certificates associated.

Thanks to the invention it is possible to receive or to have an anonymous document or anonymous invoice that can be used with a third party while protecting his privacy, i.e. anonymity, non traceability, no linkability,... which does not disclosed any other information on him.

## Claims

1.  Method for a user to prove his ownership of an anonymous document generated by and sent from a secure system of a third party to a secure element of the user, the method comprising it comprises pre-computing pairs of key $(K_S, K_P)$, comprising a secret key and a public key of the user, and storing said pairs of key in the secure element of the user, **characterised in that** it comprises signing the document both by the user and the third party, each pair of keys pre-computed by the secure element of the user being a one-time key.

2.  Method according to claim 1, **characterised in that** it comprises sending a first pseudo-certificate generated by the secure element of the user to the secure system of the third party and sending back a pseudo-certificate generated by the secure system of the third party to the secure element of the user so that the user and the third party are able to store the document and the associated pseudo-certificates.

3.  Method according to any of the previous claims, **characterised in that** it comprises signing each public key $(K_P^i)$ of the user by an identity provider server (IPS).

4.  Method according to claim 3, **characterised in that** it comprises sending a pseudo certificate to the identity provider server (IPS) so that the third party is able to check the authenticity of the user.

5.  Method according to any of the previous claims 3 to 4, **characterised in that** the identity provider server IPS signs a batch of user public keys pre-computed by the secure element (10) during spare time.

6.  Method according to claims 3 to 5, **characterised in that** it comprises uploading a batch of public keys encrypted with the public key of the identity provider (IPS).

7.  Method according to claim 3 to 6, **characterised in that** it comprises checking whether the public key of the user has been revoked by sending the pseudo certificate of the publique key of the user $(K_P^i)$ to the identity provider (IPS).

8.  Method according to any of the previous claims, **characterised in that** the secure element (10) of the user (1)stores all certificates or pseudo certificates.

9.  Method according to any of the previous claims, **characterised in that** it comprises transferring the ownership of the document to another user, and storing ownership transfer data in the secure element.

10. Method according to claim 11, **characterised in that** it comprises a step of erasing the transferred document from the secure element of the user, and all the certificates or pseudo-certificates associated.

**Fig. 1**

Europäisches
Patentamt

European
Patent Office

Office européen
des brevets

# EUROPEAN SEARCH REPORT

Application Number

EP 12 30 6678

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/22787 A2 (BANKERS TRUST CO [US]) 20 April 2000 (2000-04-20) <br> * page 1, line 5 - page 23, line 4 * <br> * page 58, line 19 - page 60, line 13 * <br> * tables 1-6,13 * <br> * figures 1,2 * | 1-10 | INV. <br> H04L9/32 <br> G06F21/62 |
| X | US 6 076 078 A (CAMP LINDA JEAN [US] ET AL) 13 June 2000 (2000-06-13) <br> * abstract * <br> * column 1, line 11 - column 18, line 19 * <br> * claims 1-8 * <br> * figures 1-8 * | 1-10 | |
| A | KIYOMOTO S ET AL: "Design of Anonymous Attribute Authentification Mechanism", IEICE TRANSACTIONS ON COMMUNICATIONS, COMMUNICATIONS SOCIETY, TOKYO, JP, vol. E92B, no. 4, 1 April 2009 (2009-04-01), pages 1112-1118, XP001547185, ISSN: 0916-8516, DOI: 10.1587/TRANSCOM.E92.B.1112 * the whole document * | 1-10 | |

TECHNICAL FIELDS SEARCHED (IPC)

H04L
G06F

The present search report has been drawn up for all claims

| Place of search | Date of completion of the search | Examiner |
|---|---|---|
| Munich | 17 May 2013 | Mariggis, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 30 6678

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2013

| Patent document cited in search report | | Publication date | Patent family member(s) | | Publication date |
|---|---|---|---|---|---|
| WO 0022787 | A2 | 20-04-2000 | AU<br>WO | 1105200 A<br>0022787 A2 | 01-05-2000<br>20-04-2000 |
| US 6076078 | A | 13-06-2000 | NONE | | |

EPO FORM P0459

For more details about this annex : see Official Journal of the European Patent Office, No. 12/82